# EUROPEAN PATENT SPECIFICATION

(11) **EP 1 014 743 B1**
(45) Date of publication and mention of the grant of the patent: **16.03.2005**
(21) Application number: 99124234.8
(22) Date of filing: 03.12.1999
(51) Int. Cl.: H04Q 7/38

(54) **Method for switching to mail service during call in base station**
Verfahren zum Umschalten eines Anrufs auf einen Nachrichtdienst in einer Basisstation
Procédé pour commuter un appel en cours à un service de courrier dans un station de base

(30) Priority: 26.12.1998 KR 9859031
(43) Date of publication of application: 28.06.2000
(73) Proprietor: SAMSUNG ELECTRONICS CO., LTD., Suwon-City, Kyungki-do (KR)
(72) Inventor: Lim, Young-Ho, Kumi-shi, Kyongsangbuk-do (KR)
(74) Representative: Grünecker, Kinkeldey, Stockmair & Schwanhäusser Anwaltssozietät

(56) References cited:
- WO-A-97/23963
- GB-A- 2 322 768

## Description

The present invention relates generally to a mail service provided to a mobile telephone (or a mobile station) from a base station in a mobile communication system, and in particular, to a method for switching to a mail service when a mobile telephone moves, during a call, to a no-service area or cannot maintain the call due to surrounding noises.

In general, a mobile communication service provider provides mobile telephones with a mail service which is classified into a voice mail service and a data mail service. With regard to the mail service, when a called party's mobile telephone is turned off or is located in a no-service area, the base station informs a calling party that the called party is in a no-serviceable condition, and stores a voice message or data from the calling party in a mail box to send the stored voice message or data to the called party when the called party gets back to a serviceable condition. In this manner, it is possible to send the called party the message received from the calling party during the no-serviceable condition.

Conventionally, when the mobile telephone moves to the no-service area during a call, the call is simply disconnected because strength of a signal received from the base station is lower than a threshold. In addition, there is a case where the user cannot talk over the phone due to surrounding noises. Even in this case, the user cannot but simply end the call.

Accordingly, there is a demand for a method of switching to a mail service when the mobile telephone is in a no-serviceable condition. In particular, for data communication, it is required to continuously transmit data to prevent data loss even though there occurs the no-serviceable condition during a call.

WO 97/23963-A discloses telecommunication system with call drop-out messaging activation in which a messaging service is offered in the event of a call dropout, so that one party can record a message which is retrieved by the other party after the dropout.

It is therefore an object of the present invention to provide a method for rounding off the telephone conversation when a mobile telephone is in a no-serviceable condition, thereby offering the possibility of the necessary flexibility to react on the no-serviceable condition.

This problem is solved by a method according to the subject matter of independent claim 1. Preferred embodiments are the subject matter of the dependent claims.

The above and other objects, features and advantages of the present invention will become more apparent from the following detailed description when taken in conjunction with the accompanying drawings in which:
FIG. 1 is a block diagram illustrating the connection between a base station and mobile telephones according to an embodiment of the present invention;
FIG. 2 is a diagram illustrating the connection between a mail box in a base station and mobile telephones according to an embodiment of the present invention; and
FIG. 3 is a flow chart illustrating a procedure for switching to a mail service during a call in a base station according to an embodiment of the present invention.

A preferred embodiment of the present invention will be described herein below with reference to the accompanying drawings. In the following description, well-known functions or constructions are not described in detail since they would obscure the invention in unnecessary detail.

In an exemplary embodiment of the present invention, a base station switches to a mail service during a call, as follows:
(1) when a call is performed between mobile telephones both subscribed to the mail service, switching to the mail service is applied to both of the mobile telephones.
(2) when a call is performed between a mobile telephone subscribed to the mail service and a mobile telephone not subscribed to the mail service, switching to the mail service is applied only to the mobile telephone subscribed to the mail service.
(3) when a call is performed between a mobile telephone subscribed to the mail service and a wire telephone, switching to the mail service is applied only to the mobile telephone subscribed to the mail service.

That is, in every case, the invention is applied only to the mobile telephone subscribed to the mail service.

For convenience of explanation, the invention will be described with reference to the case (1) stated above. However, the invention can also be equally applied to the cases (2) and (3).

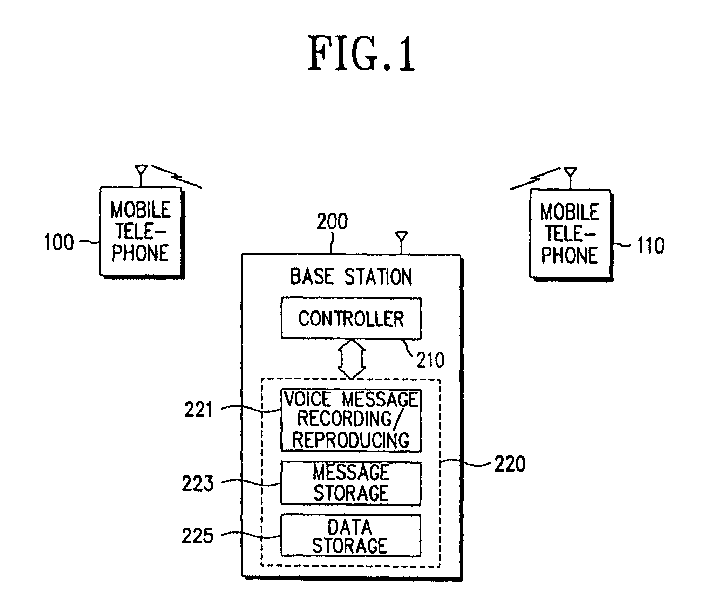

FIG. 1 shows the connection between a base station and mobile telephones according to an embodiment of the present invention. A base station 200 controls communication between a mobile telephone 100 and a mobile telephone 110. The base station 200 includes a controller 210 and a mail box 220. The controller 210 controls the overall operation of the base station 200, and particularly controls operation of the mail box 220. The mail box 220 includes a voice message recording/reproducing device 221, a message storage 223 and a data storage 225.

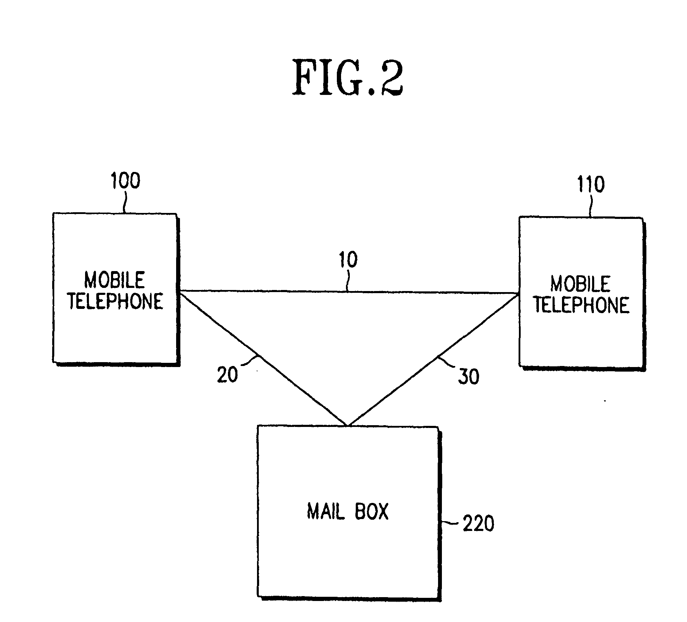

FIG. 2 shows the connection between the mail box 220 and the mobile telephones 100 and 110 according to an embodiment of the present invention. In FIG. 2, reference numeral 10 represents a case where a call is performed between the mobile telephone 100 and the mobile telephone 110. Reference numeral 20 represents a case where when the mobile telephone 110 moves, during a call, to the no-service area or a call stop signal is received from the mobile telephone 110, the base station 200 connects the other mobile telephone 100 to the mail box 220 to perform the mail service. Reference numeral 30 represents a case where when the mobile telephone 100 moves, during a call, to the no-service area or a call stop signal is received from the mobile telephone 100, the base station 200 connects the other mobile telephone 110 to the mail box 220 to perform the mail service.

In addition, the mobile telephones 100 and 110 include a specific key for generating the call stop signal when the user cannot talk over the telephone due to surrounding noises. The call stop signal is previously appointed between the base station 200 and the mobile telephones 100 and 110.

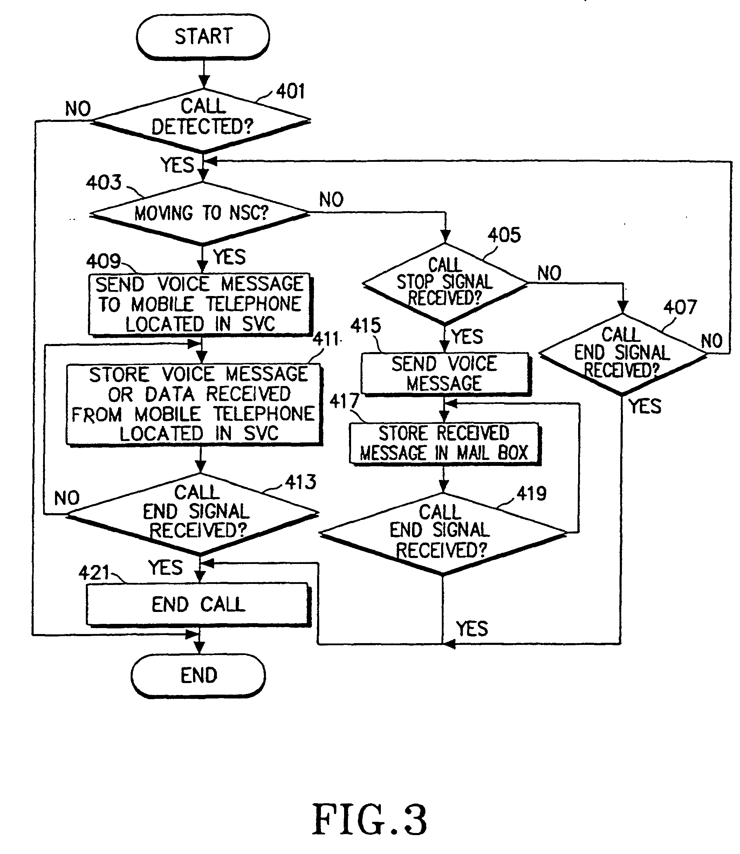

FIG. 3 shows a procedure in which the base station 200 switches to the mail service when a no-serviceable condition happens during a call according to an embodiment of the present invention. The no-serviceable condition happens when the mobile telephone gets out of the service area during a call, or when the user cannot talk over the phone due to the surrounding noises. A term during a call" as used herein refers to data transmission as well as a voice call.

Referring to FIG. 3, the base station controller 210 determines in step 401 whether or not a call is performed between the mobile telephones 100 and 110 (see reference numeral 10). Upon detection of a call, the controller 210 determines in step 403 whether a specific mobile telephone, for example, the mobile telephone 100 moves to the no-service area (NSC) during the call. When the mobile telephone 100 moves to the no-service area, the base station controller 210 disconnects the calleven though the user does not press an END key, because strength of the signal received from the mobile telephone 100 is lower than a threshold.

Upon detection of call disconnection, the base station controller 210 switches the other mobile telephone 110 located in the service area (SVC) to the mail box 220 to provide the mail service, in step 409. That is, the controller 210 switches to the case represented by 30 from the case represented by 10 in FIG. 2. After switching to the case represented by 30, the controller 210 controls the voice message recording/reproducing device 221 to send a voice message informing the mobile telephone 110 that the mobile telephone 100 is in the no-service area and requesting the user of the mobile telephone 110 to leave a message. For example, the voice message can be The other party has moved to a no-service area. Please, leave a message''. Thereafter, when a voice message or data is received from the mobile telephone 110 located in the service area, the controller 210 stores the received voice message in the message storage 223 and the data in the data storage 225, in step 411. Thereafter, the controller 210 determines in step 413 whether or not a call end signal is received from the mobile telephone 110 located in the service area. Upon detection of the call end signal, the controller 210 ends the mail service and the call, in step 421.

In the above process, if data communication was performed between the mobile telephone 110 located in the service area and the mobile telephone 100 located in the no-service area, the controller 210 will directly switch to the mail service without transmitting the voice message, and stores the data transmitted from the mobile telephone 110 located in the service area in the data storage 225.

With regard to the case represented by 20 of FIG. 2, when the mobile telephone 110 moves to the no-service area during a call, the mobile telephone 100 located in the service area is switched to the mail box 220. In this case, the controller 210 operates in the same manner as in the case represented by 30.

In the meantime, when the mobile telephones 100 and 110 are both located in the service area in step 403, the controller 210 determines in step 405 whether a call stop signal is received from any one of the mobile telephones.

If such a call stop signal is not received, the controller 210 determines in step 407 whether or not a call end signal is received. Upon detection of the call end signal, the controller 6-210 end, the mail service and the call in step 421.

Upon receipt of the call stop signal, the controller 210 disconnects, in step 415, the call from the mobile telephone from which the call stop signal is received, switches the other mobile telephone to the mail box 220 and sends the other mobile telephone a voice message informing the no-serviceable condition and requesting the user to leave a message. For example, the call stop signal can be generated by continuously pressing `*', '*' and 'SEND' keys. The user will press the above keys when he cannot continue the call due to the surrounding noises. Then, the controller 210 switches the other mobile telephone to the mail service. Thereafter, in step 417, the controller 210 stores a voice message received from the other mobile telephone in the message storage 223. Thereafter, the controller 210 determines in step 419 whether or not a call end signal is received from the other mobile telephone. Upon detection of the call end signal, the controller 210 ends the mail service and the call, in step 421.

Meanwhile, when the mobile telephone which was located in the no-service area has moved back to the service area, the base station controller 210 connects a call to the mobile telephone to inform receipt of unknown message or data, and sends the stored voice message or data to the mobile telephone. Also, when the mobile telephone which has moved back to the service area sends a request for transmission of the stored message or data, the base station controller 210 sends the voice message or data stored in the mail box 220 to the mobile telephone.

To sum up, when a mobile telephone gets out of the service area during a call or when the user cannot continue the call due to the surrounding noises, the base station switches to the mail service to store a message in the mail box, thereby contributing to continuity of the call.

## Claims

1. A method for switching to a mail service during a call in a base station (200), comprising the steps of:
switching a first mobile telephone (100) located in a service area to the mail service, when a second mobile telephone (110) moves to a no-service area (step 403) or when a call stop signal is received from the second mobile telephone (step 405), wherein the call stop signal is generated by a user of the second mobile telephone (110) by continuously pressing a predetermined specific key in the event that a no-serviceable condition happens due to surroundings;
sending step 409, 415 from the base station (200) to the first mobile telephone (100) a voice message informing a user of the first mobile telephone (100) of the no-serviceable condition and requesting the user of the first mobile telephone (100) to leave a message;
upon receipt of a message from the first mobile telephone (100), storing (step 411, 417) the received message in a mail box; and
upon receipt of a call end signal (step 413, 419) representing complete transmission of the message, ending (step 421) the call.

2. The method as claimed in claim 1, further comprising the step of connecting, when the second mobile telephone moves back to a service area, a call to the second mobile telephone and sending the message stored in the mail box to the second mobile telephone.

3. The method as claimed in claim 1, wherein when a call is performed between two mobile telephones both subscribed to the mail service, switching to the mail service is applied to both of the mobile telephones.

4. The method as claimed in claim 1, wherein when a call is performed between a mobile telephone subscribed to the mail service and a mobile telephone not subscribed to the mail service, switching to the mail service is applied only to the mobile telephone subscribed to the mail service.

5. The method as claimed in claim 1, wherein when a call is performed between a mobile telephone subscribed to the mail service and a wire telephone, switching to the mail service is applied only to the mobile telephone subscribed to the mail service.

6. The method as claimed in claim 3, wherein the message received from the first mobile telephone includes a voice message or data.

7. The method as claimed in claim 6, further comprising the step of connecting, when the second mobile telephone moves back to the service area, a call to the second mobile telephone and sending the voice message or data stored in the mail box to the second mobile telephone.

8. The method as claimed in claim 7, further comprising the step of sending, upon receipt of a request for transmission of a voice message or data from the second mobile telephone, the voice message or data stored in the mail box to the second mobile telephone.

9. The method as claimed in claim 1, wherein the predetermined specific key as continuously pressed is '*', '*' and 'SEND' keys.

10. A mobile communication system for switching to a mail service during a call the mobile communication system comprising a base station (200), a first mobile telephone (100) and a second mobile telephone (110), wherein the base station further comprises:
switching means adapted to switch a first mobile telephone (100) located in a service area to the mail service, when a second mobile telephone (110) moves to a no-service area or when a call stop signal is received from the second mobile telephone, wherein the call stop signal is generated by a user of the second mobile telephone by continuously pressing a predetermined specific key in the event that a no-serviceable condition happens due to surrounding;
sending means adapted to send from the base station to the first mobile telephone a voice message informing a user of the first mobile telephone of the no-serviceable condition and requesting the user of the first mobile telephone to leave a message;
storing means adapted to store a received message in a mail box upon receipt of the message from the first mobile telephone; and
ending means adapted to end the call upon receipt of a call end signal representing complete transmission of the message from the first mobile telephone.

11. A base station (200) for switching to a mail service during a call in a mobile communication system with a first mobile telephone (100) and a second mobile telephone (110), the base station comprising:
switching means adapted to switch a first mobile telephone (100) located in a service area to the mail service, when a second mobile telephone (110) moves to a no-service area or when a call stop signal is received from the second mobile telephone, wherein the call stop signal is generated by a user of the second mobile telephone by continuously pressing a predetermined specific key in the event that a no-serviceable condition happens due to surroundings;
sending means adapted to send from the base station to the first mobile telephone a voice message informing a user of the first mobile telephone of the no-serviceable condition and requesting the user of the first mobile telephone to leave a message; and
storing means adapted to store a received message in a mail box upon receipt of the message from the first mobile telephone; and
ending means adapted to end the call upon receipt of a call end signal representing complete transmission of the message from the first mobile telephone.

## Patentansprüche

1. Verfahren zum Umschalten auf einen Mitteilungsdienst während eines Rufes in einer Basisstation (200), das die folgenden Schritte umfasst:
Umschalten eines ersten Mobiltelefons (100), das sich in einem Versorgungsbereich befindet, auf den Mitteilungsdienst, wenn sich ein zweites Mobiltelefon (110) in einen Nicht-Versorgungsbereich bewegt (403) oder wenn ein Rufunterbrechungssignal von dem zweiten Mobiltelefon empfangen wird (Schritt 405), wobei das Rufunterbrechungssignal von einem Benutzer des zweiten Mobiltelefons (110) erzeugt wird, indem eine vorgegebene spezielle Taste kontinuierlich gedrückt wird, wenn ein versorgungsloser Zustand aufgrund von Umgebungsbedingungen eintritt;
Senden (Schritt 409, 415) einer Sprachmitteilung von der Basisstation (200) zu dem ersten Mobiltelefon (100), die einen Benutzer des ersten Mobiltelefons (100) über den versorgungslosen Zustand informiert und den Benutzer des ersten Mobiltelefons (100) auffordert, eine Mitteilung zu hinterlassen;
beim Empfang einer Mitteilung von dem ersten Mobiltelefon (100) Speichern (Schritt 411, 417) der empfangenen Mitteilung in einem Mitteilungsspeicher; und
beim Empfang eines Ruf-Beendigungssignals (413, 419), das vollständige Übertragung der Mitteilung anzeigt, Beenden (Schritt 421) des Rufs.

2. Verfahren nach Anspruch 1, das des Weiteren den Schritt des Durchschaltens eines Rufs zu dem zweiten Mobiltelefon und des Sendens der in dem Mitteilungsspeicher gespeicherten Mitteilung zu dem zweiten Mobiltelefon umfasst, wenn sich das zweite Mobiltelefon wieder in einen Versorgungsbereich bewegt.

3. Verfahren nach Anspruch 1, wobei, wen n ein Ruf zwischen zwei Mobiltelefonen durchgeführt wird, die beide den Mitteilungsdienst abonniert haben, das Umschalten auf den Mitteilungsdienst für beide Mobiltelefone durchgeführt wird.

4. Verfahren nach Anspruch 1, wobei, wenn ein Ruf zwischen einem Mobiltelefon, das den Mitteilungsdienst abonniert hat, und einem Mobiltelefon, das den Mitteilungsdienst nicht abonniert hat, durchgeführt wird, das Umschalten auf den Mitteilungsdienst nur für das Mobiltelefon ausgeführt wird, das den Mitteilungsdienst abonniert hat.

5. Verfahren nach Anspruch 1, wobei, wen n ein Ruf zwischen einem Mobiltelefon, das den Mitteilungsdienst abonniert hat, und einem drahtgebundenen Telefon durchgeführt wird, das Umschalten auf den Mitteilungsdienst nur für das Mobiltelefon durchgeführt wird, das den Mitteilungsdienst abonniert hat.

6. Verfahren nach Anspruch 3, wobei die Mitteilung, die von dem ersten Mobiltelefon empfangen wird, eine Sprachmitteilung oder Daten enthält.

7. Verfahren nach Anspruch 6, das des Weiteren den Schritt des Durchschaltens eines Rufs zu dem zweiten Mobiltelefon und des Sendens der in dem Mitteilungsspeicher gespeicherten Sprachmitteilung oder Daten zu dem zweiten Mobiltelefon umfasst, wenn sich das zweite Mobiltelefon wieder in den Versorgungsbereich bewegt.

8. Verfahren nach Anspruch 7, das des Weiteren den Schritt des Sendens der in dem Mitteilungsspeicher gespeicherten Sprachmitteilung oder Daten zu dem zweiten Mobiltelefon umfasst, wenn eine Aufforderung zum Übertragen einer Sprachmitteilung oder von Daten von dem zweiten Mobiltelefon empfangen wird.

9. Verfahren nach Anspruch 1, wobei es sich bei der vorgegebenen speziellen Taste, die kontinuierlich gedrückt wird, um die ^{(*)}, ^{(*)} und "SENDEN"-Taste handelt.

10. Mobilkommunikationssystem zum Umschalten auf einen Mitteilungsdienst während eines Rufs, wobei das Mobilkommunikationssystem eine Basisstation (200), ein erstes Mobiltelefon (100) und ein zweites Mobiltelefon (110) umfasst, und wobei die Basisstation des Weiteren umfasst:
eine Umschalteinrichtung, die so eingerichtet ist, dass sie ein erstes Mobiltelefon (100), das sich in einem Versorgungsbereich befindet, auf den Mitteilungsdienst umschaltet, wenn sich ein zweites Mobiltelefon (100) in einen Nicht-Versorgungsbereich bewegt oder wenn ein Ruf-Unterbrechungssignal von dem zweiten Mobiltelefon empfangen wird, wobei das Ruf-Unterbrechungssignal von einem Benutzer des zweiten Mobiltelefons erzeugt wird, indem eine vorgegebene spezielle Taste kontinuierlich gedrückt wird, wenn ein versorgungsloser Zustand aufgrund von Umgebungsbedingungen eintritt;
eine Sendeeinrichtung, die so eingerichtet ist, dass sie von der Basisstation eine Sprachmitteilung zu dem ersten Mobiltelefon sendet, die einen Benutzer des ersten Mobiltelefons über den versorgungslosen Zustand informiert und den Benutzer des ersten Mobiltelefons auffordert, eine Mitteilung zu hinterlassen;
eine Speichereinrichtung, die so eingerichtet ist, dass sie beim Empfang der Mitteilung von dem ersten Mobiltelefon eine empfangene Mitteilung in einem Mitteilungsspeicher speichert; und
eine Beendigungseinrichtung, die so eingerichtet ist, dass sie den Ruf beim Empfang eines Ruf-Beendigungssignals beendet, das vollständige Übertragung der Mitteilung von dem ersten Mobiltelefon anzeigt.

11. Basisstation (200) zum Umschalten auf einen Mitteilungsdienst während eines Rufs in einem Mobilkommunikationssystem mit einem ersten Mobiltelefon (100) und einem zweiten Mobiltelefon (110), wobei die Basisstation umfasst:
eine Umschalteinrichtung, die so eingerichtet ist, dass sie ein erstes Mobiltelefon (100), das sich in einem Versorgungsbereich befindet, auf den Mitteilungsdienst umschaltet, wenn sich ein zweites Mobiltelefon (110) in einen Nicht-Versorgungsbereich bewegt oder wenn ein Ruf-Unte rbrechungssignal von dem zweiten Mobiltelefon empfangen wird, wobei das Ruf-Unterbrechungssignal von einem Benutzer des zweiten Mobiltelefons erzeugt wird, indem kontinuierlich eine vorgegebene spezielle Taste gedrückt wird, wenn ein versorgungsloser Zustand aufgrund von Umgebungsbedingungen eintritt;
eine Sendeeinrichtung, die so eingerichtet ist, dass sie von der Basisstation eine Sprachmitteilung zu dem ersten Mobiltelefon sendet, die einen Benutzer des ersten Mobiltelefons über den versorgungslosen Zustand informiert und den Benutzer des ersten Mobiltelefons auffordert, eine Mitteilung zu hinterlassen; und
eine Speichereinrichtung, die so eingerichtet ist, dass sie beim Empfang der Mitteilung von dem ersten Mobiltelefon eine empfangene Mitteilung in einem Mitteilungsspeicher speichert; und
eine Beendigungseinrichtung, die so eingerichtet ist, dass sie den Ruf beim Empfang eines Ruf-Beendigungssignals beendet, das vollständige Übertragung der Mitteilung von dem ersten Mobiltelefon anzeigt.

## Revendications

1. Procédé pour effectuer une commutation sur un service de messagerie pendant un appel dans une station de base (200), comprenant les étapes qui consistent :
à commuter un premier téléphone mobile (100) situé dans une zone de service sur le service de messagerie, lorsqu'un second téléphone mobile (110) arrive à une zone de non-service (étape 403) ou lorsqu'un signal d'arrêt d'appel est reçu du second téléphone mobile (étape 405), le signal d'arrêt d'appel étant généré par un utilisateur du second téléphone mobile (110) en appuyant en continu sur une touche spécifique prédéterminée dans le cas où une condition ne permettant pas le service apparaît du fait de l'environnement ;
l'envoi (étape 409, 415), de la station de base (200) au premier téléphone mobile (100), d'un message vocal informant un utilisateur du premier téléphone mobile (100) de la condition ne permettant pas le service et demandant à l'utilisateur du premier téléphone mobile (100) de laisser un message ;
à la réception d'un message provenant du premier téléphone mobile (100), le stockage (étape 411, 417) du message reçu dans une boîte de messagerie ; et
à la réception d'un signal de fin d'appel (étape 413, 419) représentant une transmission complète du message, la cessation (étape 421) de l'appel.

2. Procédé selon la revendication 1, comprenant en outre l'étape qui consiste à connecter, lorsque le second téléphone mobile revient dans une zone de service, un appel au second téléphone mobile et à envoyer les messages stockés dans la boîte de messagerie au second téléphone mobile.

3. Procédé selon la revendication 1, dans lequel, lorsqu'un appel est exécuté entre deux téléphones mobiles tous deux abonnés au service de messagerie, une commutation sur le service de messagerie est appliquée aux deux téléphones mobiles.

4. Procédé selon la revendication 1, dans lequel, lorsqu'un appel est exécuté entre un téléphone mobile abonné au service de messagerie et un téléphone mobile qui n'est pas abonné au service de messagerie, une commutation sur le service de messagerie est appliquée uniquement au téléphone mobile abonné au service de messagerie.

5. Procédé selon la revendication 1, dans lequel, lorsqu'un appel est exécuté entre un téléphone mobile abonné au service de messagerie et un téléphone câblé, une commutation sur le service de messagerie est appliquée uniquement au téléphone mobile abonné au service de messagerie.

6. Procédé selon la revendication 3, dans lequel le message reçu du premier téléphone mobile comprend un message vocal ou des données vocales.

7. Procédé selon la revendication 6, comprenant en outre l'étape qui consiste à connecter, lorsque le second téléphone mobile revient dans la zone de service, un appel au second téléphone mobile et à envoyer le message vocal ou les données vocales stockées dans la boîte de messagerie au second téléphone mobile.

8. Procédé selon la revendication 7, comprenant en outre l'étape qui consiste à envoyer, à la réception d'une demande pour la transmission d'un message vocal ou de données vocales depuis le second téléphone mobile, le message vocal ou les données vocales stockées dans la boîte de messagerie au second téléphone mobile.

9. Procédé selon la revendication 1, dans lequel la touche spécifique prédéterminée sur laquelle on appuie en continu comprend les touches "*","*" et "ENVOI".

10. Système de communication mobile pour une commutation sur un service de messagerie pendant un appel, le système de communication mobile comprenant une station de base (200), un premier téléphone mobile (100) et un second téléphone mobile (110), dans lequel la station de base comporte en outre :
un moyen de commutation conçu pour commuter un premier téléphone mobile (100), situé dans une zone de service, sur le service de messagerie, lorsqu'un second téléphone mobile (110) arrive dans une zone de non-service ou lorsqu'un signal d'arrêt d'appel est reçu du second téléphone mobile, le signal d'arrêt d'appel étant généré par un utilisateur du second téléphone mobile en appuyant en continu sur une touche spécifique prédéterminée dans le cas où une condition ne permettant pas le service apparaît du fait de l'environnement ;
un moyen d'envoi conçu pour envoyer de la station de base au premier téléphone mobile un message vocal informant un utilisateur du premier téléphone mobile de la condition ne permettant pas le service et demandant à l'utilisateur du premier téléphone mobile de laisser un message ;
un moyen de stockage conçu pour stocker un message reçu dans une boîte de messagerie à la réception du message provenant du premier téléphone mobile ; et
un moyen de cessation conçu pour faire cesser l'appel à la réception d'un signal de fin d'appel représentant une transmission complète du message depuis le premier téléphone mobile.

11. Station de base (200) pour une commutation sur un service de messagerie pendant un appel dans un système de communication mobile avec un premier téléphone mobile (100) et un second téléphone mobile (110), la station de base comportant :
un moyen de commutation conçu pour commuter un premier téléphone mobile (100), se trouvant dans une zone de service, sur le service de messagerie, lorsqu'un second téléphone mobile (110) arrive dans une zone de non-service ou lorsqu'un signal d'arrêt d'appel est reçu du second téléphone mobile, le signal d'arrêt d'appel étant généré par un utilisateur du second téléphone mobile en appuyant en continu sur une touche spécifique prédéterminée dans le cas où une condition ne permettant pas un service apparaît du fait de l'environnement ;
un moyen d'envoi conçu pour envoyer de la station de base au premier téléphone mobile un message vocal informant un utilisateur du premier téléphone mobile de la condition ne permettant pas le service et demandant à l'utilisateur du premier téléphone mobile de laisser un message ;
un moyen de stockage conçu pour stocker un message reçu dans une boîte de messagerie à la réception du message provenant du premier téléphone mobile ; et
un moyen de cessation conçu pour faire cesser l'appel à la réception d'un signal de fin d'appel représentant une transmission complète du message depuis le premier téléphone mobile.
